# EUROPEAN PATENT SPECIFICATION

(11) **EP 0 446 967 B1**
(45) Date of publication and mention of the grant of the patent: **06.09.1995**
(21) Application number: 91108307.9
(22) Date of filing: 10.05.1984
(51) Int. Cl.: G11B 7/24, G11B 7/26

(54) **An optical memory element**
Optisches Speicherelement
Elément pour mémoire optique

(30) Priority: 13.05.1983 JP 84613/83; 10.01.1984 JP 3797/84
(43) Date of publication of application: 18.09.1991
(62) Divisional of application: 84303176.6
(73) Proprietor: SHARP KABUSHIKI KAISHA, Osaka 545 (JP)
(72) Inventor: Ohta, Kenji, Kitakatsuragi-gun Nara-ken (JP); Hirokane, Junji, Tenri-shi, Nara-ken (JP); Katayama, Hiroyuki, Nara-shi Nara-ken (JP); Takahashi, Akira, Nara-shi, Nara-ken (JP); Yamaoka, Hideyoshi, Matsubara-shi, Osaka (JP)
(74) Representative: Brown, Kenneth Richard

(56) References cited:
- EP-A- 0 155 000
- DE-A- 2 046 872
- PATENT ABSTRACTS OF JAPAN vol. 2, no. 88 (E-78)19 July1978 & JP-A-53 052 104
- IEEE SPECTRUM August 1979, pages 26 - 33; BULTHUIS ET AL: 'Ten billion bits on a disk'

## Description

The present invention relates to an optical memory element on which information can be optically recorded.

The invention which is the subject of co-pending European patent application 84303176.9, from which this present application is divided, relates to a method for manufacturing such an optical memory element.

There has recently been developed an optical memory system which optically stores the information in high density and with mass storage. This optical memory system ensures the high density, mass storage because the information recording unit (bit) is determined by the diameter of the beam which is used in the recording operation. Generally, the bit size is selected to be about 1µm.

However, in order to ensure such high density, mass storage, the optical beam position must be accurately controlled so that the information is recorded at a predetermined position, and the information is read out from a preselected position.

In the case of an optical memory system of the read-only type, address information can be recorded on the optical memory element at the time of recording of data information. Accordingly, the optical beam position is controllable while the data information is read out from the optical memory element. However, in the optical memory system of the add-on-memory type or the erasable memory type, it is difficult to record the address information on the optical memory element at the time of recording of the data information. Therefore, in such add-on-optical or erasable optical memories, guide signals or guide addresses which are used to control the optical beam position are normally recorded on the optical memory element.

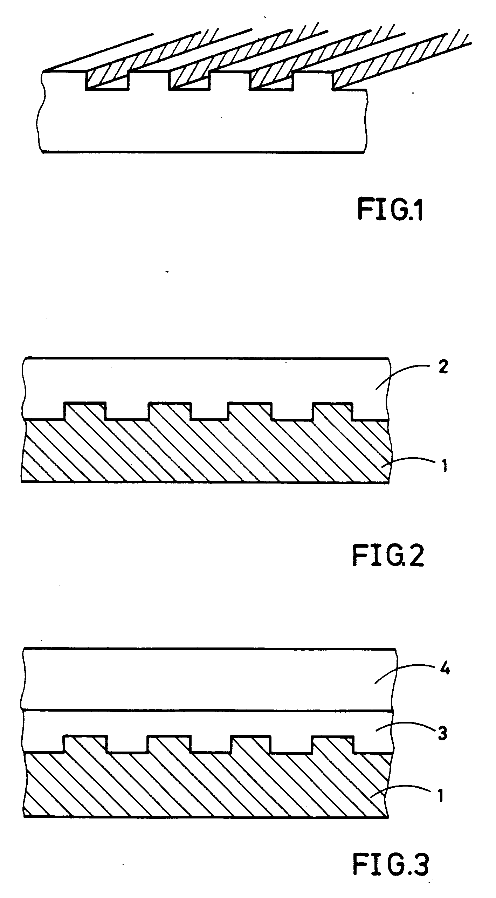

FIGURE 1 schematically shows the general construction of an optical memory element of the add-on-memory type or the erasable memory type. Stripe-shaped grooves are formed on the optical memory element. The information recording operation and the information playback operation are conducted along these stripe-shaped grooves. The stripe-shaped grooves can be intermittently formed so as to bear the bit information representing the address of the groove. Certain methods have been proposed for forming the stripe-shaped grooves on the optical memory element.

FIGURE 2 shows an example of a known method for forming the stripe-shaped grooves on the optical memory element. A nickel (Ni) stamper 1 having the stripe-shaped grooves formed thereon is employed to transcribe the stripe-shaped grooves onto a resin substrate 2 made of, for example, acrylic or polycarbonate, using an injection molding technique.

FIGURE 3 shows another example of the conventional method for forming the stripe-shaped grooves on the optical memory element. Photo-polymer 3 is interposed between the stamper 1, having the stripe-shaped grooves formed thereon, and a substrate 4 made of, for example, glass or acrylic so as to transcribe the stripe-shaped grooves onto the photo-polymer 3 (namely, the 2P method).

Both methods employ a resin layer in the optical memory element. Therefore, there is the possibility that oxygen or moisture will reach the recording material through the resin layer. This will deteriorate the recording material. That is, the convention method does not ensure a stable operation of the optical memory element.

EP-A-0038499 discloses an optical recording disc having a pre-grooved disc-shaped resin base material of acryl or the like, and a recording film formed on the face of the guide grooves, the recording film being of a material which changes in reflectance or transmittance by the application of light. The grooves are formed by a hot press method, or an injection method or the like.

DE-B2-2342285 discloses a method of manufacturing a video long-playing record in which a glass mother provided with an information pattern etched in a surface oxide layer of SiOₓ is obtained by a process involving coating with resist, selective exposure using a laser beam modulated in accordance with the information, development of the exposed resist layer, etching of the oxide layer and removal of the remaining photoresist portions.

The article entitled "Ten billion bits on a disk" in IEEE Spectrum August 1979 pages 26 to 33 discloses pregrooving of a recording disk by forming a continuous-spiral groove which is used as an aid to tracking of an optical recording head during both reading and recording. The pregrooved disk is made using an unspecified replication technique from a master disk. Data recording in the grooves is effected by melting holes in a recording layer.

Pre-published PCT application WO 83/00460 discloses a process for making a radiation-reflecting record carrier, such as a video disc on which video and/or audio information is stored in an optically readable track of alternate reflective and non-reflective areas. Replication from a master or submaster having the information-recorded track as apertures in a reflective film is effected photographically by using the master or sub-master as a photo mask for exposing a photoresist layer formed on a reflective coating deposited on a substrate. The portions of the photoresist layer exposed to UV light through the apertures in the perforated layer of the mask are removed and the corresponding portions of the reflective layer thereby exposed are chemically etched away. Remaining portions of the resist layer are then stripped to expose the non-etched portions of the reflective layer. The resulting apertured reflective layer carries recorded information which replicates that on the master.

According to one aspect of the present invention there is provided an optical memory element of the type having a substrate formed with a guide groove pattern and supported on said substrate a recording medium layer in which information can be recorded, and from which the recorded information can be read by a reading operation using the guide groove pattern to control the position of an optical beam projected onto the memory element, characterised in that said substrate is a glass substrate with said guide groove pattern etched into a surface thereof, and in that said recording medium overlies said etched surface of said glass substrate, said guide groove pattern having been formed by etching the glass substrate through the groove pattern in a photoresist intermediately formed on the glass substrate.

According to another aspect of the present invention there is provided an optical memory element of the type having a substrate formed with a guide groove pattern and supported on said substrate a recording medium layer in which information can be recorded, and from which the recorded information can be read by a reading operation using the guide groove pattern to control the position of an optical beam projected onto the memory element, characterised in that said substrate comprises a glass support layer and a layer of an etchable material formed on the glass support layer, and said guide groove pattern is etched into the layer of etchable material down to a depth less than the full thickness of said layer of etchable material, and in that said recording medium layer overlies said etched layer of etchable material, said guide groove pattern having been formed by etching the layer of etchable dielectric material through the groove pattern in a photoresist intermediately formed on the layer of etchable dielectric material.

The present invention will be better understood from the detailed description given hereinbelow and the accompanying drawings which are given by way of illustration only, and thus are not limitative of the present invention and wherein:
FIGURE 1 is a perspective view of an essential part of an optical memory element of the add-on-memory type or the erasable memory type;
FIGURE 2 is a sectional view showing a manufacturing step of an example of a known method for manufacturing the optical memory element;
FIGURE 3 is a sectional view showing a manufacturing step of another example of a known method for manufacturing the optical memory element;
FIGURES 4(A) through 4(E) are sectional views for explaining steps of a method of manufacturing an optical memory element according to the present invention;
FIGURES 5(A) and 5(B) are sectional views of examples of a groove formed by the method of FIGURES 4(A) through 4(E);
FIGURE 6 is a graph showing the groove condition formed by the method of FIGURES 4(A) through 4(E), when the etching condition is changed;
FIGURE 7 is a sectional view of an optical memory element in accordance with the invention, formed by the method of FIGURES 4(A) through 4(E);
FIGURES 8(A) and 8(B) are sectional views for explaining steps of a method of manufacturing another optical memory element of the present invention; and
FIGURE 9 is a sectional view of an optical memory element in accordance with the invention, formed by the method of FIGURES 8(A) and 8(B).

### DESCRIPTION OF THE PREFERRED EMBODIMENTS

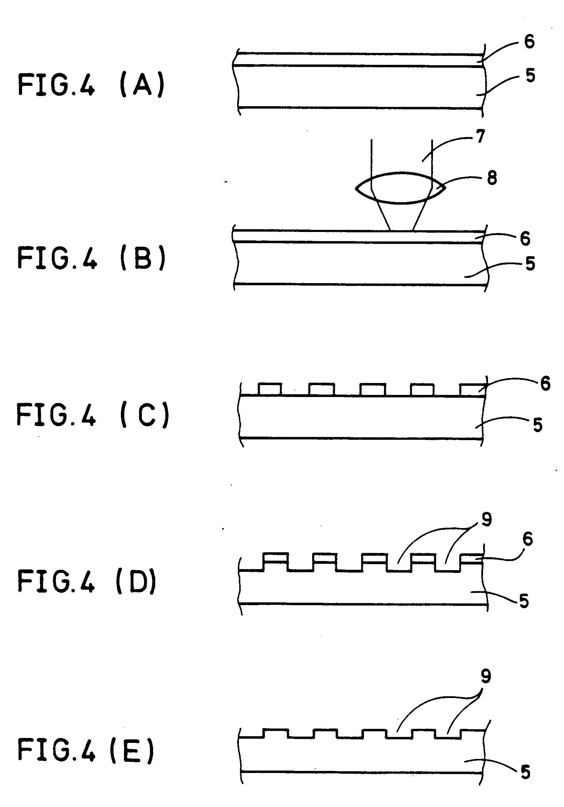

FIGURES 4(A) through 4(E) show steps for forming stripe-shaped grooves in the glass substrate in an embodiment of the present invention.

### STEP 1

A glass substrate 5 is used as a substrate of an optical memory element because the glass substrate does not pass oxygen and moisture therethrough. The glass substrate 5 is coated with a resist film 6 (Figure 4(A)).

### STEP 2

An argon (Ar) laser beam 7 is applied to the resist film 6 disposed on the glass substrate 5, via an objective lens 8, so as to describe lines having a desired width corresponding to the guide groove shown in FIGURE 1. In a preferred form, the described line has an intermittent configuration to show the address information. (FIGURE 4(B))

### STEP 3

Developing operation is conducted to the resist film 6 which has the described lines. Stripe-shaped grooves are formed in the resist film 6 (FIGURE 4(C)).

### STEP 4

Sputtering operation (reactive ion etching) is conducted to the glass substrate 5 coated by the developed resist film 6 within the etching gas, for example, CF₄ or CHF₃. Stripe-shaped grooves 9 are formed in the glass substrate 5 (FIGURE 4(D)).

### STEP 5

The developed resist film 6 is removed from the glass substrate 5 through the use of solvent such as acetone, or by means of sputtering in the O₂ atmosphere. In this way, stripe-shaped grooves 9 are formed in the glass substrate 5 (FIGURE 4(E)).

In the embodiment of FIGURES 4(A) through 4(E), the argon (Ar) laser beam 7 is employed to form the latent guide pattern in the resist film 6 at the step 2. Instead, a photo-mask carrying the guide groove pattern can be employed. In this case, ultraviolet rays are uniformly applied to the resist film 6 via the photo-mask, thereby forming the latent guide pattern in the resist film 6.

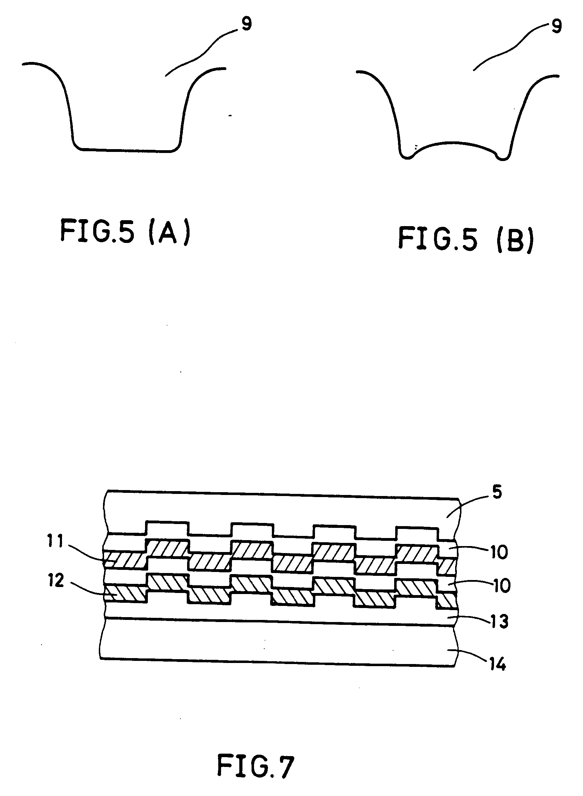

FIGURES 5(A) and 5(B) show the sectional configurations of the stripe-shaped grooves 9 when the condition of the reactive ion etching (step 4) is changed. The sectional configurations of are measured by the taly step. FIGURE 5(A) shows an example wherein the bottom of the groove 9 has a flat surface. The depth of the groove 9 is 500.10⁻¹⁰ m (500 Å) and the width of the groove is 1µm. FIGURE 5(B) shows another example wherein the bottom of the groove 9 has a curved surface. Optical memory elements having the grooves shown in FIGURE 5(A) and FIGURE 5(B) were formed to compare the characteristics. The data reading operation was conducted while using the grooves as the guide tracks, and the noises of the reproduced signal were measured while conducting the servo operation. The optical memory element having the grooves shown in FIGURE 5(A) developed an output signal of which the noise component is lower than that of the output signal developed from the optical memory element having the grooves shown in FIGURE 5(B) by 2 to 3 dB. That is, higher reliability is ensured if the groove 9 has the flat bottom surface. The etching condition for forming the groove 9 shown in FIGURE 5(A) has a lower etching gas pressure and a higher self-bias of the sputter electrode as compared with the etching condition for forming the groove shown in FIGURE 5(B).

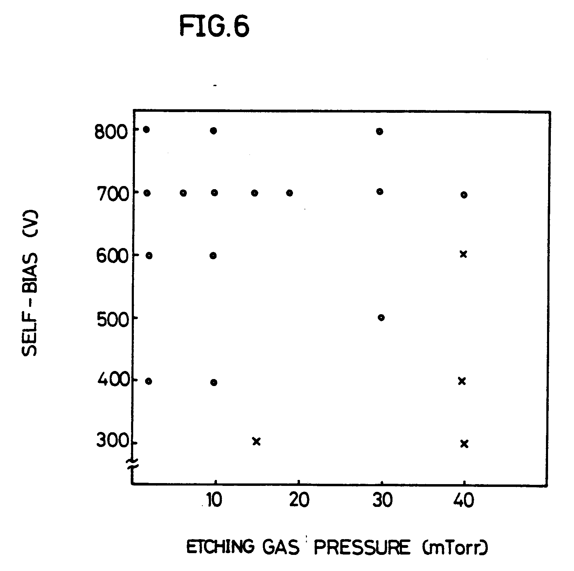

FIGURE 6 shows the groove condition when the etching condition is changed. The points marked by the symbol " " represent the condition at which the groove having the flat bottom surface is formed, and the points marked by the symbol " x " represent the condition at which the groove having the curved bottom surface is formed. It will be clear from FIGURE 6 that a desirable groove having the flat bottom surface is formed when the etching gas pressure is selected lower than about 4Nm⁻² (30 mTorr) and the self-bias of the sputter electrode is selected higher than 400V at the reactive etching step.

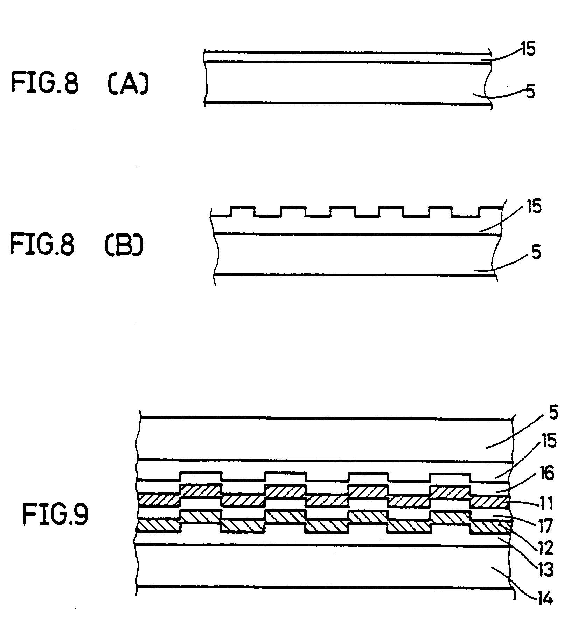

FIGURE 7 shows an example of an optical memory element which has the above-mentioned desired groove formed by the method of FIGURES 4(A) through 4(E). The glass substrate 5 has the stripe-shaped grooves formed under the above-mentioned desired etching condition. A dielectric layer 10 made of a nitride film such as an AIN film or a Si₃N₄ film is disposed on the glass substrate 5. A recording medium layer 11 made of a thin-film of alloy including rare earth elements and transition metals, for example, GdNdFe, GdTbFe or GdCo is formed on the dielectric layer 10. Another dielectric layer 10 is disposed on the recording medium layer 11 so that the recording medium layer 11 is sandwiched between a pair of dielectric layers 10. A reflection film 12 made of, for example, an aluminium film or a stainless steel film is disposed on the last mentioned dielectric layer 10. The dielectric layers 10 and the reflection film 12 function, in combination, to enhance the magneto-optical effect characteristics and to prevent oxygen and moisture from reaching the recording medium layer 11. A protective plate 14 made of, for example, a glass plate or an acrylic plate is attached to the reflection film 12 via an adhesion layer 13. The protective plate 14 can be omitted when two optical memory elements are attached to each other in a manner that the rear surfaces thereof are attached to each other. In this case, the optical memory device is the both-side disc.

Although the optical memory element of FIGURE 7 employs the reflection film 12, the reflection film 12 can be omitted when the recording medium layer 11 has a sufficient thickness. Such a type is called as the optical memory element of the single layer construction. Furthermore, the present invention is applicable to the optical memory element of the add-on-memory type which includes a recording medium layer made of Te, TeS or TeOₓ.

FIGURES 8(A) and 8(B) show steps for forming stripe-shaped grooves in another embodiment of the present invention. A SiO₂ layer 15 is formed on the glass substrate 5 by means of the sputtering method, electron beam evaporation method, or the CVD method (FIGURE 8(A)). The SiO₂ layer 15 is not necessarily a SiO₂ layer exactly, but a SiOₓ layer functions in a same manner. The resist film 6 is disposed on the SiO₂ layer 15, and the same steps as those of FIGURES 4(A) to 4(E) are carried out to form the stripe-shaped grooves in the SiO₂ layer 15 (FIGURE 8(B)). The SiO₂ layer 15 has a sufficient thickness, and the sputter-etching operation is terminated when the bottom of the groove reaches the middle portion of the entire thickness of the SiO₂ layer 15. Since the entire surface of the glass substrate 5 is covered by the SiO₂ layer 15, the metal material included in the glass substrate 5 such as alkali metal, for example, natrium will never elute on the surface of the substrate. Thus, the recording medium layer will not be deteriorated by the metal material eluted from the glass substrate 5.

Since the grooves are formed in the SiO₂ layer 15 in the embodiment of FIGURES 8(A) and 8(B), the sputter-etching operation is conducted in a shorter time period as compared with the method of FIGURES 4(A) through 4(E).

In the method of FIGURES 8(A) and 8(B), the SiO₂ film 15 (or SiOₓ film) is formed on the glass substrate 5, and the stripe-shaped grooves are formed in the SiO₂ film 15. However, instead of the SiO₂ film (SiOₓ film), another dielectric film, for example, a Si₃N₄ film, an AlN film, or a MgF film can be used, or a laminated layer of these dielectric films can be used.

FIGURE 9 shows an example of an optical memory element which includes the stripe-shaped grooves formed by the method of FIGURES 8(A) and 8(B). The SiO₂ film 15 is formed on the glass substrate 5. The stripe-shaped grooves are formed in the SiO₂ film 15 (the grooves function as the guide tracks). A dielectric layer 16 having the index of refraction higher than that of the SiO₂ film 15 is formed on the SiO₂ film 15. The dielectric layer 16 is preferably made of an AlN film or a SiO film, and preferably has a thickness of about 500.10⁻¹⁰ m to 1000.10⁻¹⁰ m (500 Å to 1000 Å). The recording medium layer 11 made of a thin-film of alloy including rare earth elements and transition metals, for example, GdTbFe, TbFe, or GdCoFe is formed on the dielectric layer 16. The recording medium layer 11 has a thickness about 50.10⁻¹⁰ m to ⁴00.10⁻¹⁰ m (50 Å to 400 Å). The minimum thickness of the recording medium layer 11 is determined by the minimum requirement for ensuring the formation of the perpendicular magnetization film. The maximum thickness of the recording medium layer 11 is determined by the limit thickness for ensuring stable operation related to the magneto-optical effects. Thus, the preferred thickness of the recording medium layer 11 varies depending on the condition for manufacturing the recording medium layer 11. When the recording medium layer 11 is formed by the sputtering method, the perpendicular magnetization film is difficult to obtain if the film thickness is less than 50.10⁻¹⁰ m (50 Å). Another dielectric layer 17 made of, for example, an AlN film or a SiO₂ film is formed on the recasting medium layer 11. The reflection film 12 made of, for example, Cu, Al, Ni, or stainless steel is disposed on the dielectric layer 17. The dielectric layer 17 and the reflection film 12 function, in combination, to enhance the magneto-optical effect characteristics and to present oxygen and moisture from reaching the recording medium layer 11. The protective plate 14 made of, for example, a glass plate or an acrylic plate is attached to the reflection film 12 via the adhesion layer 13.

## Claims

1. An optical memory element of the type having a substrate (3) formed with a guide groove pattern (9) and supported on said substrate a recording medium layer (11) in which information can be recorded, and from which the recorded information can be read by a reading operation using the guide groove pattern to control the position of an optical beam projected onto the memory element, characterised in that said substrate is a glass substrate (5), with said guide groove pattern etched into a surface thereof and in that said recording medium layer (11) overlies said etched surface of said glass substrate, said guide groove pattern having been formed by etching the glass substrate (5) through the groove pattern in a photoresist intermediately formed on the glass substrate.

2. An optical memory element of the type having a substrate (5, 15) formed with a guide groove pattern (9) and supported on said substrate a recording medium layer (11) in which information can be recorded, and from which the recorded information can be read by a reading operation using the guide groove pattern to control the position of an optical beam projected onto the memory element, characterised in that said substrate comprises a glass support layer (5) and a layer (15) of an etchable dielectric material formed on the glass support layer, and said guide groove pattern is etched into the layer (15) of etchable dielectric material down to a depth less than the full thickness of said layer of etchable dielectric material, and in that said recording medium layer (11) overlies said etched layer of etchable dielectric material, said guide groove pattern having been formed by etching the layer (15) of etchable dielectric material through the groove pattern in a photoresist intermediately formed on the layer of etchable dielectric material.

3. An optical memory element according to claim 2 wherein said layer (15) of etchable dielectric material comprises at least one of SiOₓ, Si₃N₄, AlN and MgF.

4. An optical memory element according to claim 1 wherein a first dielectric layer (10) is deposited on the grooved substrate (5) before the depositing of the recording medium layer (11).

5. An optical memory element according to claim 4 wherein said first dielectric layer (10) is made of AlN or Si₃N₄.

6. An optical memory element according to claim 2 or claim 3 wherein a first dielectric layer (16) is deposited on the substrate and is disposed between the etched layer (15) and the recording medium layer (11).

7. An optical memory element according to claim 6 wherein said first dielectric layer (16) has a refractive index higher than that of the layer (15) of etchable material.

8. An optical memory element according to claim 7 wherein said layer (15) of etchable material is made of SiOₓ, and said first dielectric layer (16) is made of AlN or SiO.

9. An optical memory element according to any of claims 4 to 8 wherein a second dielectric layer (10;17) is provided on the side of said recording medium layer (11) remote from said first dielectric layer (10;16).

10. An optical memory element according to claim 9 when dependent on claim 8 wherein said second dielectric layer (17) is made of AlN or SiO₂.

11. An optical memory element according to claim 9 or claim 10 wherein a reflective layer (12) is deposited on said second dielectric layer (10;17).

12. An optical memory element according to claim 11 wherein said reflective layer (12) is made of Cu, Al, Ni or stainless steel.

13. An optical memory element according to claim 11 or claim 12 and further including a protective plate (14) attached to the reflective layer on the side thereof which is remote from the substrate (5;5,15).

14. An optical memory device in which a pair of optical memory elements, each according to any of claims 9 to 13 are attached to each other by their surfaces which are remote from their substrates.

15. An optical memory element according to any preceding claim wherein said recording medium layer is a thin-film of a rare earth element transition metal alloy.

16. An optical memory element according to claim 15 wherein said alloy is GdNdFe.

17. An optical memory element according to claim 15 wherein said alloy is GdTbFe.

18. An optical memory element according to claim 15 wherein said alloy is GdCo.

19. An optical memory element according to claim 15 wherein said alloy is TbFe.

20. An optical memory element according to claim 15 wherein said alloy is GdCoFe.

21. An optical memory element according to any of claims 1 to 14 wherein said memory element is of the add-on-memory type, wherein said recording medium layer is made of Te, TeS or TeOₓ.

## Patentansprüche

1. Optisches Speicherelement vom Typ mit einem Substrat (5), das mit einem Führungsgrabenmuster (9) versehen ist und eine Aufzeichnungsmediumsschicht (11) trägt, in der Information aufgezeichnet werden kann, und von der die aufgezeichnete Information durch einen Lesevorgang unter Verwendung des Führungsgrabenmusters zum Kontrollieren der Position eines auf das Speicherelement gestrahlten optischen Strahls gelesen werden kann, **dadurch gekennzeichnet, daß** das Substrat ein Glassubstrat (5) ist, in dessen eine Fläche das Führungsgrabenmuster eingeätzt ist, und daß die Aufzeichnungsmediumsschicht (11) über der geätzten Fläche des Glassubstrats liegt, wobei das Führungsgrabenmuster dadurch ausgebildet wurde, daß das Glassubstrat (5) durch das Grabenmuster in einem Photoresist geätzt wurde, der vorübergehend auf dem Glassubstrat ausgebildet wurde.

2. Optisches Speicherelement vom Typ mit einem Substrat (5, 15), das mit einem Führungsgrabenmuster (9) versehen ist und eine Aufzeichnungsmediumsschicht (11) trägt, in der Information aufgezeichnet werden kann, und von der die aufgezeichnete Information durch einen Lesevorgang unter Verwendung des Führungsgrabenmusters zum Kontrollieren der Position eines auf das Speicherelement gestrahlten optischen Strahls gelesen werden kann, **dadurch gekennzeichnet, daß** das Substrat eine Glasträgerschicht (5) und eine Schicht (15) aus einem auf der Glasträgerschicht ausgebildeten ätzbaren dielektrischen Material aufweist, wobei das Führungsgrabenmuster in die Schicht (15) aus ätzbarem dielektrischem Material bis zu einer Tiefe eingeätzt ist, die kleiner als die volle Dicke der Schicht des ätzbaren dielektrischen Materials ist, und daß die Aufzeichnungsmediumsschicht (11) über der geätzten Schicht des ätzbaren dielektrischen Materials liegt, wobei das Führungsgrabenmuster dadurch hergestelt wurde, daß die Schicht (15) aus ätzbarem dielektrischem Material durch das Grabenmuster in einem Photoresist geätzt wurde, der vorübergehend auf der Schicht aus ätzbarem dielektrischem Material ausgebildet wurde.

3. Optisches Speicherelement nach Anspruch 2, bei dem die Schicht (15) aus ätzbarem dielektrischem Material aus mindestens einem der Materialien SiOₓ, Si₃N₄, AlN und MgF besteht.

4. Optisches Speicherelement nach Anspruch 1, bei dem auf dem mit Gräben versehenen Substrat (5) eine erste dielektrische Schicht (10) abgeschieden wird, bevor die Aufzeichnungsmediumsschicht (11) abgeschieden wird.

5. Optisches Speicherelement nach Anspruch 4, bei dem die erste dielektrische Schicht (10) aus AlN oder Si₃N₄ besteht.

6. Optisches Speicherelement nach Anspruch 2 oder Anspruch 3, bei dem eine erste dielektrische Schicht (16) auf dem Substrat abgeschieden wird und sie zwischen der geätzten Schicht (15) und der Aufzeichnungsmediumsschicht (11) liegt.

7. Optisches Speicherelement nach Anspruch 6, bei dem die erste dielektrische Schicht (16) einen Brechungsindex über demjenigen der Schicht (15) aus ätzbarem Material hat.

8. Optisches Speicherelement nach Anspruch 7, bei dem die Schicht (15) aus ätzbarem Material aus SiOₓ besteht und die erste dielektrische Schicht (16) aus AlN oder SiO besteht.

9. Optisches Speicherelement nach einem der Ansprüche 4 bis 8, bei dem eine zweite dielektrische Schicht (10; 17) auf der Seite der Aufzeichnungsmediumsschicht (11) abgewandt von der ersten dielektrischen Schicht (10; 16) vorhanden ist.

10. Optisches Speicherelement nach Anspruch 9 in Abhängigkeit von Anspruch 8, bei dem die zweite dielektrische Schicht (17) aus AlN oder SiO₂ besteht.

11. Optisches Speicherelement nach Anspruch 9 oder Anspruch 10, bei dem eine Reflexionsschicht (12) auf der zweiten dielektrischen Schicht (10; 17) abgeschieden ist.

12. Optisches Speicherelement nach Anspruch 11, bei dem die Reflexionsschicht (12) aus Cu, Al, Ni oder rostfreiem Stahl besteht.

13. Optisches Speicherelement nach Anspruch 11 oder Anspruch 12 und ferner mit einer Schutzplatte (14), die an der Reflexionsschicht auf derjenigen Seite derselben befestigt ist, die vom Substrat (5; 5, 15) abgewandt ist.

14. Optisches Speicherbauelement, in dem ein Paar optische Speicherelemente, jeweils nach einem der Ansprüche 9 bis 13, durch ihre Oberflächen aneinander befestigt sind, die von ihren Substraten abgewandt sind.

15. Optisches Speicherelement nach einem der vorstehenden Ansprüche, bei dem die Aufzeichnungsmediumsschicht ein Dünnfilm aus einer Seltenerdelement/Übergangsmetall-Legierung ist.

16. Optisches Speicherelement nach Anspruch 15, bei dem die Legierung GdNdFe ist.

17. Optisches Speicherelement nach Anspruch 15, bei dem die Legierung GdTbFe ist.

18. Optisches Speicherelement nach Anspruch 15, bei dem die Legierung GdCo ist.

19. Optisches Speicherelement nach Anspruch 15, bei dem die Legierung TbFe ist.

20. Optisches Speicherelement nach Anspruch 15, bei dem die Legierung GdCoFe ist.

21. Optisches Speicherelement nach einem der Ansprüche 1 bis 14, das vom Hinzufügespeichertyp ist und bei dem die Aufzeichnungsmediumsschicht aus Te, TeS oder TeOₓ besteht.

## Revendications

1. Elément de mémoire optique du type comprenant un substrat (3) comportant un motif de sillons de guidage (9) et, supportée sur ledit substrat, une couche de support d'enregistrement (11) dans laquelle des informations peuvent être enregistrées et à partir de laquelle les informations enregistrées peuvent être lues grâce à une opération de lecture utilisant le motif de sillons de guidage pour contrôler la position d'un faisceau optique projeté sur l'élément de mémoire, caractérisé en ce que ledit substrat est un substrat en verre (5), le motif de sillons de guidage étant formé par attaque dans une surface de celui-ci, et en ce que ladite couche de support d'enregistrement (11) recouvre ladite surface attaquée dudit substrat en verre, ledit motif de sillons de guidage ayant été formé par attaque du substrat en verre (5) à travers le motif de sillons défini dans un photorésist formé d'une manière intermédiaire sur le substrat en verre.

2. Elément de mémoire optique du type comprenant un substrat (5, 15) comportant un motif de sillons de guidage (9) et, supportée sur ledit substrat, une couche de support d'enregistrement (11) dans laquelle des informations peuvent être enregistrées et à partir de laquelle les informations enregistrées peuvent être lues grâce à une opération de lecture utilisant le motif de sillons de guidage pour contrôler la position d'un faisceau optique projeté sur l'élément de mémoire, caractérisé en ce que ledit substrat comprend une couche de support en verre (5) et une couche (15) d'un matériau diélectrique pouvant être attaqué, formée sur la couche de support en verre, en ce que ledit motif de sillons de guidage est formé par attaque dans la couche (15) de matériau diélectrique pouvant être attaqué jusqu'à une profondeur inférieure à l'épaisseur totale de celle-ci, et en ce que ladite couche de support d'enregistrement (11) recouvre ladite couche attaquée du matériau diélectrique pouvant être attaqué, ledit motif de sillons de guidage ayant été formé par attaque de la couche (15) de matériau diélectrique pouvant être attaqué à travers le motif de sillons défini dans un photorésist formé d'une manière intermédiaire sur la couche de matériau diélectrique pouvant être attaqué.

3. Elément de mémoire optique selon la revendication 2, dans lequel ladite couche (15) de matériau diélectrique pouvant être attaqué comprend l'un au moins des éléments du groupe constitué par SiOₓ, Si₃N₄, AlN et MgF.

4. Elément de mémoire optique selon la revendication 1, dans lequel une première couche diélectrique (10) est déposée sur le substrat (5) pourvu de sillons avant le dépôt de la couche de support d'enregistrement (11).

5. Elément de mémoire optique selon la revendication 4, dans lequel ladite première couche diélectrique (10) est formée d'AlN ou de Si₃N₄.

6. Elément de mémoire optique selon la revendication 2 ou la revendication 3, dans lequel une première couche diélectrique (16) est déposée sur le substrat et disposée entre la couche (15) attaquée et la couche de support d'enregistrement (11).

7. Elément de mémoire optique selon la revendication 6, dans lequel ladite première couche diélectrique (16) possède un indice de réfraction supérieur à celui de la couche (15) de matériau pouvant être attaqué.

8. Elément de mémoire optique selon la revendication 7, dans lequel ladite couche (15) de matériau pouvant être attaqué est formée de SiOₓ, tandis que ladite première couche diélectrique (16) est formée d'AlN ou de SiO.

9. Elément de mémoire optique selon l'une quelconque des revendications 4 à 8, dans lequel une seconde couche diélectrique (10 ; 17) est prévue sur la face de ladite couche de support d'enregistrement (11), éloignée de ladite première couche diélectrique (10 ; 16).

10. Elément de mémoire optique selon la revendication 9 lorsqu'elle est dépendante de la revendication 8, dans lequel ladite seconde couche diélectrique (17) est formée d'AlN ou de SiO₂.

11. Elément de mémoire optique selon la revendication 9 ou la revendication 10, dans lequel une couche réflectrice (12) est déposée sur ladite seconde couche diélectrique (10 ; 17).

12. Elément de mémoire optique selon la revendication 11, dans lequel ladite couche réflectrice (12) est formée de Cu, d'Al, de Ni ou d'un acier inoxydable.

13. Elément de mémoire optique selon la revendication 11 ou la revendication 12, comprenant également une plaque protectrice (14) fixée à la couche réflectrice sur la face de celle-ci qui est éloignée du substrat (5 ; 5, 15).

14. Dispositif de mémoire optique dans lequel deux éléments de mémoire optique respectivement conformes à l'une quelconque des revendications 9 à 13, sont fixés l'un à l'autre par leurs faces éloignées de leurs substrats.

15. Elément de mémoire optique selon l'une quelconque des revendications précédentes, dans lequel ladite couche de support d'enregistrement est un film mince formé d'un alliage d'éléments de terres rares et de métaux de transition.

16. Elément de mémoire optique selon la revendication 15, dans lequel ledit alliage est GdNdFe.

17. Elément de mémoire optique selon la revendication 15, dans lequel ledit alliage est GdTbFe.

18. Elément de mémoire optique selon la revendication 15, dans lequel ledit alliage est GdCo.

19. Elément de mémoire optique selon la revendication 15, dans lequel ledit alliage est TbFe.

20. Elément de mémoire optique selon la revendication 15, dans lequel ledit alliage est GdCoFe.

21. Elément de mémoire optique selon l'une quelconque des revendications 1 à 14, dans lequel ledit élément de mémoire est du type à mémoire additionnelle, et dans lequel ladite couche de support d'enregistrement est formée de Te, de TeS ou de TeOx.
